# EUROPEAN PATENT SPECIFICATION

(11) **EP 4 239 369 B1**
(45) Date of publication and mention of the grant of the patent: **01.10.2025**
(21) Application number: 22160053.9
(22) Date of filing: 03.03.2022
(51) Int. Cl.: G01S 13/937, H01Q 1/02, G01S 7/497

(54) **ANTI-FREEZING RADAR APPARATUS AND ANTI-FREEZING METHOD FOR RADAR APPARATUS**
FROSTSCHUTZRADARGERÄT UND EIN FROSTSCHUTZVERFAHREN FÜR EIN RADARGERÄT
APPAREIL RADAR ANTIGIVRAGE ET PROCÉDÉ ANTIGIVRAGE POUR APPAREIL RADAR

(43) Date of publication of application: 06.09.2023
(73) Proprietor: FURUNO ELECTRIC CO., LTD., Nishinomiya-City, Hyogo 662-8580 (JP)
(72) Inventor: MATSUSHITA, Kazumasa, Nishinomiya-City, 662-8580 (JP); SAKAMOTO, Masato, Nishinomiya-City, 662-8580 (JP); NAGAUCHI, Jumpei, Nishinomiya-City, 662-8580 (JP)
(74) Representative: Müller Hoffmann & Partner

(56) References cited:
- EP-A2- 2 736 115
- WO-A1-2018/093306
- DE-A1- 2 809 498

## Description

### TECHNICAL FIELD

The present invention relates to a radar apparatus having high environmental resistance and particularly to an arrangement for controlling electric power supply thereto when the apparatus is under strong wind and even under cold temperature.

### BACKGROUND OF THE INVENTION

Radar apparatus has been known as an instrument for detecting the surroundings of a ship. Conventionally, the radar apparatus includes a radar antenna mounted on a vessel wherein, the surrounding targets are detected by rotating the antenna. Further, the ice-class vessels and icebreakers with high ice-resistance capabilities are used for navigation in regions where the sea surface is covered with ice, such as the Arctic. For these vessels to navigate safely and efficiently, it is important to choose an already ice-broken route. The ice radar is known as a radar that makes the cracks in the ice easier to see. Therefore, it is required that the radar antenna properly operates even at the freezing point. In the case of ice-radar and other radars that are used in extremely cold oceans, it is necessary to stabilize the rotation torque of a motor required to rotate the antenna especially at the start of rotation by alleviating the hardening of grease used in the motor. Therefore, the main purpose of the invention is to stabilize the rotation torque of the motor in both cold temperatures and strong winds. When the fixed side and the driving side are connected by ice, the load torque increases. Moreover, if the range of freezing is large, the driving torque generated by the motor cannot overcome the ice anchoring force and the antenna cannot be rotated.

In particular, when the radar is placed in a strong wind environment, the antenna is affected by the wind, and the rotation of the antenna becomes unstable, making accurate measurement difficult. Also, if the radar is placed in a cold environment, it may freeze. Due to the effect of grease hardening at the time of starting the rotation of the radar antenna under extremely cold conditions and at a low temperature, the starting torque is large, and the motor drive current is greatly required, and the rated current of the drive power supply must be increased.

A radar antenna having a heating apparatus to prevent icing have been disclosed in Japanese examined patent application publication 5995365. The radar antennas disclosed in the Japanese patent application publication is comprised of a radar antenna heating apparatus mounted on a radar antenna that can rotate the antenna. The radar antenna heating apparatus includes a plurality of heating parts and a movable mechanism. The heating parts heat a boundary portion between a rotation and a supporting part of the radar antenna. Further, the heating apparatus heats between the rotating unit and the support unit to prevent icing between the rotating unit and the support unit. The radar antenna heating apparatus performs heating according to the outside air temperature or user instructions.
Document DE 28 09 498 A1 discloses a method of controlling an anti-freezing radar apparatus, wherein electronics is heated by controlling a flow of current from a power supplier to a resistance.
Documents WO 2018 / 093 306 A1 and EP 2 736 115 A2 disclose background art.

Based on the above, there is a requirement of developing radar apparatuses having high environmental resistance, capable of preventing the unstable antenna rotation under strong wind and cold weather and icing of the antenna under cold weather.

The above-mentioned problems, shortcomings, and disadvantages are addressed herein, which will be understood by reading and studying the following specification.

### SUMMARY OF THE INVENTION

Accordingly, it is an object of the present invention to provide an anti-freezing radar apparatus capable of preventing the unstable antenna rotation under a strong wind, extremely low temperatures or icing of the antenna by stabilizing the rotation torque of a motor used for rotating the antenna by preventing the hardening of grease used in the motor.

In accomplishing this and other objects of the present invention, there is provided an anti-freezing radar apparatus having high environmental resistance, and a method of controlling an anti-freezing radar apparatus according to the respective independent claims.

According to one aspect, an anti-freezing radar apparatus is provided. The apparatus includes an antenna configured to transmit and receive microwaves, a motor configured to rotate the antenna; a power supplier configured to supply electric power to the motor and a resistance, electrically connected with the motor, configured to consume electric power generated by rotation when the antenna is rotated by an external force; a thermometer configured to measure a temperature of the radar apparatus or around the radar apparatus; and a control unit, arranged between the motor and the power supplier, configured to allow a current to flow from the power supplier to the resistance to heat the motor when the temperature measured by the thermometer is less than or equal to a predetermined temperature.

This configuration enables stable operation of the antenna under extreme cold weather and strong winds by reducing the rotation torque of the motor for rotating the antenna especially at the start of rotation by preventing the hardening of motor grease.

Another feature of the present invention is to provide an anti-freezing radar apparatus comprising a timer configured to measure a time duration for which the power supplier supplies electric power to the resistance, wherein the power supply disconnects from the resistance and connects to the motor drive unit when the time reaches a predetermined limit.

Yet another feature of the present invention is to provide an anti-freezing radar apparatus having an electric power meter, connectable to the motor, wherein the electric power meter detects an electric power and outputs a power detected signal to the control unit.

Yet another feature of the present invention is to enable stable operation of the antenna under strong wind by connecting a resistance to a drive circuit of a motor to control the rotation of an antenna. Further, the power generation energy is released to the outside as thermal energy from the resistance when the rotation speed is increased.

According to another aspect, a method of controlling an anti-freezing radar apparatus is provided. The method includes supplying an electric power to a motor by a power supplier, rotating an antenna by the motor, generating a power by rotation of the antenna by an external force, consuming the power by a resistance, measuring a temperature of or around the radar apparatus by a thermometer and controlling a flow of current from the power supplier to the resistance to heat the motor, when the temperature measured by the thermometer is less than or equal to a predetermined temperature wherein, the control unit is arranged between the motor and the power supplier, the resistance is connected with the motor, and the antenna is rotated either by the external force or by the motor.

According to the present disclosure, there is provided with an anti-freezing radar apparatus capable of stable operation under strong wind and stable operation even under cold temperature. Further, the anti-freezing radar apparatus of the present invention is capable of preventing the freezing of the rotating part of the antenna.

### EFFECTS(S) OF THE INVENTION

An anti-freezing radar apparatus according to the present invention has high environmental resistance. It is capable of preventing the unstable antenna rotation under strong wind and icing of the antenna under cold weather. The apparatus of the present invention can be suitably mounted on ice-class vessels and icebreakers which have high ice-resistance capabilities and need navigation in regions where the sea surface is covered with ice, such as the Arctic.

### BRIEF DESCRIPTION OF THE DRAWINGS

Referring now to the attached drawings which form a part of this original disclosure:
FIG.1 shows the graphical representation of the basic operation of the radar;
FIG.2 shows a basic configuration of a radar according to the present invention;
FIG.3 shows a schematic diagram of a motor, a motor driver substrate and a resistance according to the present invention;
FIG.4 shows the basic function of the control unit according to the present invention;
FIG.5 shows the detailed configuration of the control unit according to the present invention;
FIG.6 shows an operation of the control unit under normal conditions according to the first embodiment of the present invention;
FIG.7 shows an operation of the control unit in a strong wind environment according to a second embodiment of the present invention;
FIG.8 shows an operation of the control unit in cold conditions according to a third embodiment of the present invention;
FIG.9 shows a flow chart representing the electric power source control performed by the control unit according to monitored temperature;
FIG.10 shows a flow chart representing the electric power source control performed by the control unit according to monitored temperature and timer;
FIGs.11 (A) and 11 (B) show a comparison of actual motor drive current waveforms when the motor is preheated and when the motor is not preheated under a cold temperature of -40 °C.

### DETAILED DESCRIPTION OF THE INVENTION

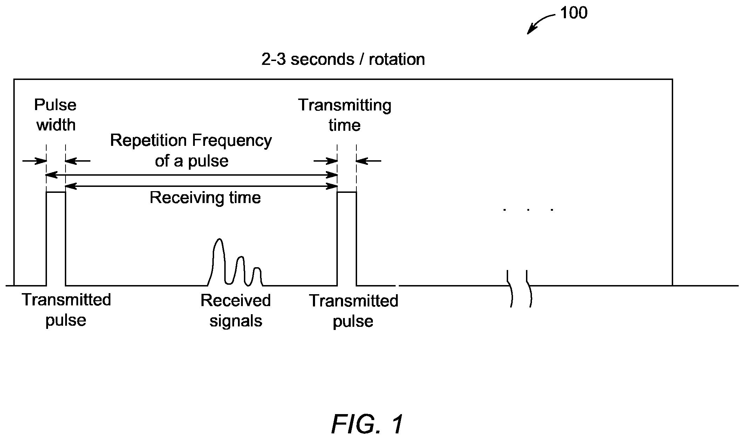

Referring to the drawings, preferred embodiments of the present invention will be explained. At first, the basic operation of the radar will be explained in FIG.1.

Referring now to FIG. 1, Radar emits microwaves in a pulsatile way wherein, these waves are called square waves. The utility of pulsed waves lies in the ability to accurately measure a distance while allowing for the reception of the energy returned from radar targets in the path of the emitted wave. The radar transmits pulsed waves repeatedly in a fixed cycle. The pulse width of a pulsed wave and its repetition frequency is measured by the distance at which the target is located. Let us consider a wave whose pulse width is 0.8 microseconds. If the frequency is set to 840Hz, then this 0.8 micro-second wide wave will be repeated 840 times during one second. Typically, the target is detected and the area is monitored 360 degrees in all directions of the vessel, so the antenna is rotated 360 degrees. Antenna rotation is typically 1-3 seconds per revolution.

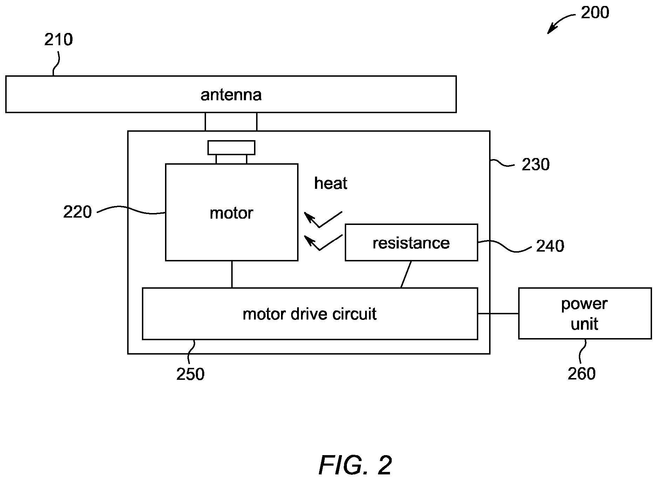

Next, referring to FIG.2, the basic configuration of a radar according to the present invention will be explained. A radar includes an antenna (210) for radiating an electromagnetic wave while rotating toward a surrounding target; an electromagnetic wave generation source (For example, magnetrons and semiconductor circuits) for generating the electromagnetic wave; a waveguide for propagating the electromagnetic wave to the antenna (210); a transmitting/receiving circuit for generating and receiving the electromagnetic wave; a signal processing circuit for processing a received signal; and a display for outputting the output of the signal processing circuit to a screen. These components are fundamental to radar. Thus all these components except the antenna are not shown in FIG.2.

As shown in FIG.2, the radar apparatus (200) is comprised of the antenna part (210), a motor (220) for rotating the antenna (210), a motor drive circuit (250) for driving and controlling the rotation of the motor (220), and a power source (260) for supplying power to the motor drive circuit (250). Further, the present invention includes a resistance, a thermometer and switches (not shown in FIG.2).

In general, a conventional Marine radar monitors the entire circumference of a ship by rotating the antenna at a predetermined period. However, when the antenna is under a strong wind, the rotation may not be stable due to strong external force by the wind. Consequently, it was necessary to prevent unstable antenna rotation. Thus, a resistance is arranged in the drive circuit of the radar for the prevention of unstable antenna rotation. Further, the electric energy generated by the rotation of the antenna may be converted into thermal energy to stabilize the operation. Thus, a motor for rotating the antenna may be used as a generator, and electric energy generated therein may be stored in a battery as regenerative energy. Moreover, when a vessel navigates in a cold ocean area, a current is supplied to the resistance arranged in the drive circuit to generate heat, thereby preventing or alleviating hardening of grease in the motor at low temperatures.

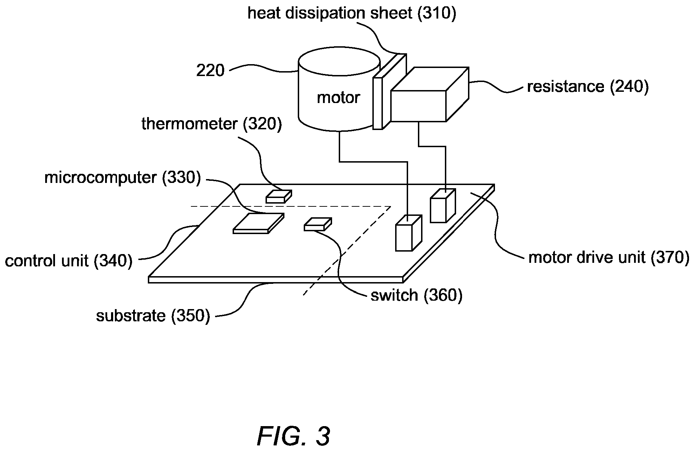

FIG.3 illustrates a schematic diagram of a motor (220), a motor driver substrate and a resistance (240) for performing the above operation. Referring to FIG.3, a control unit (340) and a motor drive unit (370) is arranged on a substrate (350). The control unit (340) includes a microcomputer (330) that controls the motor (220) and the on/off operation of the resistance (240). Further, the control unit (340) and the motor drive unit (370) are integrated on the motor driver substrate (350), however, may be configured separately. Also, a power supplier (not shown in FIG.3) is used to rotate the motor (220) by supplying power from the motor drive unit (370). The power supplier supplies stored electricity to a generator or battery installed in a vessel.

Further, a resistance (240) is arranged in the vicinity of the motor (220). The resistance (240) may be disposed of to surround an outside of a motor (220) housing since the resistance (240) generates heat in cold weather. In one example, a heat dissipation sheet (310) is disposed between the motor (220) and the resistance (240) to efficiently transmit heat generated by the resistance (240) to the entire motor (220).

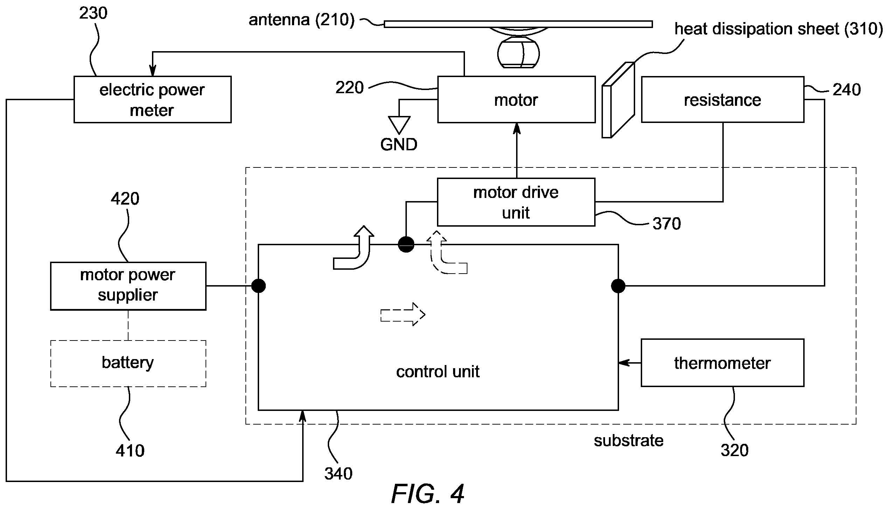

Hereinafter, the basic function of the control unit (340) will be explained in FIG.4. As shown in FIG.4, in a normal situation, electric power supplied from a motor power source (420, 410) is supplied to the motor (220) through a motor drive unit (370). At this time, the control unit (340) is connected, as shown in (1) ⇒ (2) in FIG.4, to control the power supply path indicated by a solid line). Moreover, the control unit (340) includes a thermometer (320). However, under strong winds, electric power is generated when the antenna (210) rotates above a predetermined level. Consequently, an electric power meter (230) detects an electric power and outputs a power detected signal to the control unit (340). Further, the control unit forms a path (3) ⇒ (2), and power is consumed at resistance (240) (a path indicated by a broken line in FIG.4).

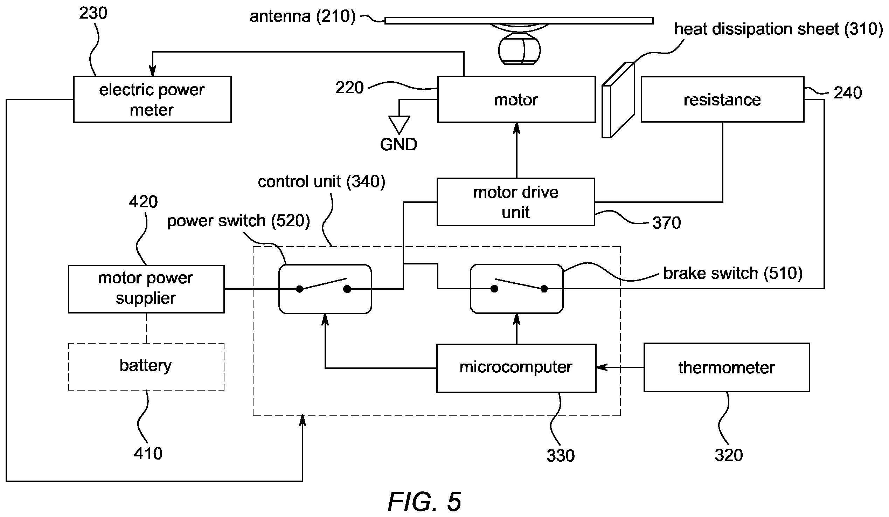

The configuration of the control unit (340) will be explained in more detail in FIG.5. Referring to FIG.5, the control unit (340) is comprised of a microcomputer (330), a power switch (520), a brake switch (510). Further, the power switch (520) turns on/off the electric power supplied from the power supplier (420) to the motor drive unit (370). The brake switch (510) is arranged between a resistance (240), the motor drive unit (370) and a power supplier (420) and used to turn on/off by receiving a control signal from the microcomputer (330). Moreover, the control unit (340) includes a thermometer (320). The microcomputer (330) generates a control signal for controlling the power switch (520) and the brake switch (510) based on the temperature measured by the thermometer (320) and whether the presence of the power generation state by the motor (220) or not.

In the configuration diagram shown in FIG. 5, a thermometer (320) is also disposed on the substrate, but in the figure, the thermometer (320) is outside of the control unit (340). Since the purpose of the thermometer (320) is to measure the temperature of and around the motor (220), the thermometer (320) is preferably disposed near the motor (220). If the temperature preventing freezing of the motor (220) or hardening of grease is associated with the measured temperature of the thermometer (320), the thermometer (320) may not necessarily be disposed of near the motor (220).

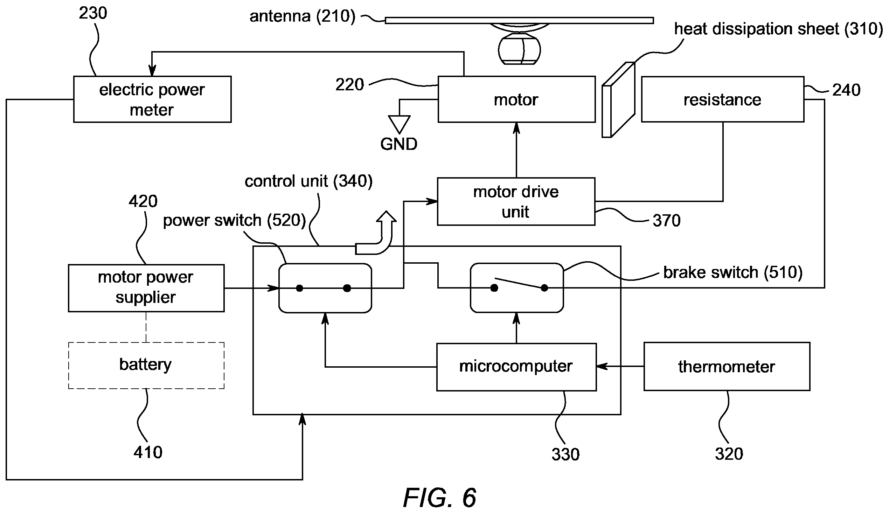

Next, the operation of the control unit under normal conditions, strong winds, and cold conditions will be described with the reference to FIG.6 to 8. Referring to the first embodiment in FIG.6, the operation of the control unit (340) under normal conditions is illustrated. When the motor (220) is rotating to rotate the antenna (210), the power switch (520) is on and the brake switch (510) is off. Further, the power is supplied from a power source (420, 410) to a motor (220) through a motor driving part (370).

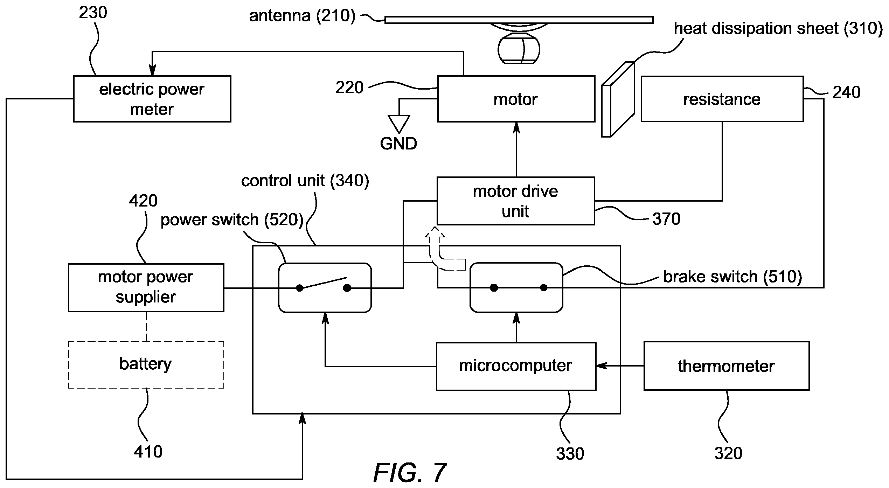

Moreover, when the motor (220) is started to rotate the antenna (210) under a strong wind condition, the motor generates electric power and voltage rises. Consequently, the power may damage the power supplier. Thus, to prevent this, as shown in FIG. 7, the brake switch (510) connects the motor drive unit (370) directly to the resistance (240). In result, the electric power generated by the motor (regenerative electric power) is consumed at the resistance (240).

The above-mentioned operation will be described in detail in the second embodiment in FIG.7. Referring to FIG.7, when a vessel is under strong wind and the external force exceeding the driving force by the motor (220) is applied to the antenna (210). As a result, the external forces cause the antenna (210) to start rotating and generate electricity. This power generation is detected, for example, by a power (voltage/current) detection circuit incorporated in a microcomputer (330). When power generation is detected, the microcomputer (330) sends a control signal to turn off the power switch (520) and turn on the brake switch (510). When power switch (520) is turned off, the power circuit (420) is disconnected from the motor (220). Thereby, the electric power generated by the motor (220) is consumed by the resistance (240), and the rotation of the antenna (210) can be stabilized.

Further, when the rotation of the antenna (210) becomes unstable due to a strong wind while the antenna (210) is rotating, the control unit (340) switches to the state of power consumption by resistance. For example, when the rotational speed exceeds 150% of the set value, the power consumption is switched to the brake switch (510), and when the rotational speed falls below 110%, the power consumption is returned to the normal motor drive.

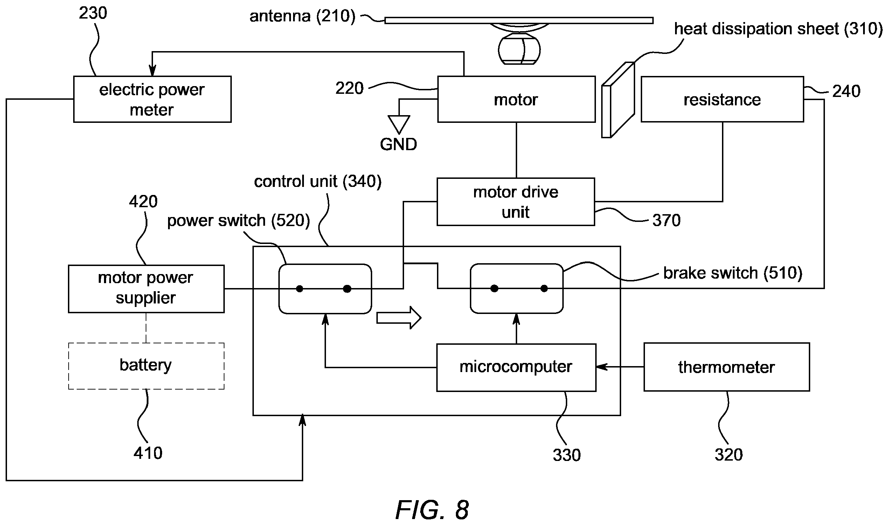

Referring to the third embodiment in FIG.8, when the thermometer (320) detects that the temperature is below a predetermined temperature in cold weather, the microcomputer (330) turns on both the power switch (520) and the brake switch (510). Thereby, electric power is also supplied to the brake switch, and the electric power is consumed in the resistance (240) to generate heat. This heat can warm the motor (220).

Table 1 summarizes the ON/OFF states of the power switch and the brake switch in the respective states shown in FIG.6-8.

**Table 1: ON/OFF states of the power switch and the brake switch**

| Situation | Power Switch | Brake switch | Function |
|---|---|---|---|
| Normal | ON | OFF | supply electric power from power supplier to motor |
| Strong Wind | OFF | ON | make up a closed circuit of motor and resistance |
| Cold Weather | ON | ON | cause a resistance to generate heat by passing an electric current through it |

As shown in the table in the normal situation, the power switch is "on" whereas the brake switch is "off" and the electric power is supplied from power supplier to motor. Further, under the strong wind, the power switch is "off" whereas the brake switch is "on" and a close circuit of motor and resistance is made. Moreover, under cold weather, the power switch and brake switch are "on" which causes a resistance to generate heat by passing an electric current through it.

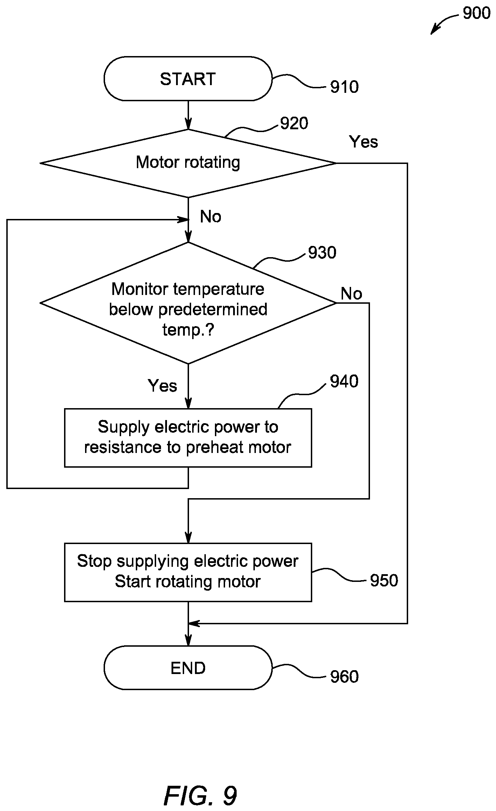

Next, FIG.9 shows a flow chart illustrating the controlling of an anti-freezing radar apparatus. The control unit judges whether the motor (220) rotates normally or abnormally by the power detector or voltage detection circuit in step (920). Further, the temperature determined by the thermometer is compared with a predetermined temperature in step (930). When the temperature determined by the thermometer is below the predetermined temperature, the electric power is supplied to the resistance to preheat the motor in step (940). This process is repeated every time. However, when the monitored temperature exceeds the predetermined temperature, the electric power supply is stopped and motor rotation is started at step (950).

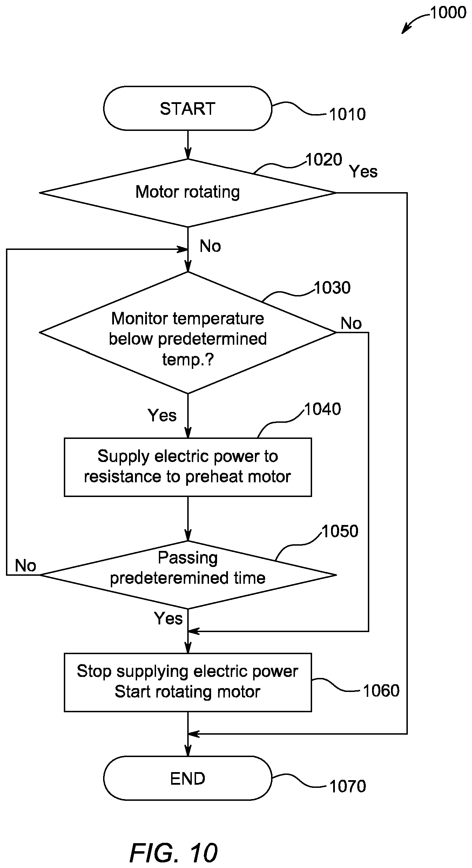

FIG.10 shows a modification of the above flow chart as it comprises an additional timer. As illustrated in FIG.10, the control unit judges the rotation of a motor in step (1020). Further, the temperature determined by the thermometer is compared with a predetermined temperature in step (1030). When the temperature determined by the thermometer is below the predetermined temperature, the electric power is supplied to the resistance to preheat the motor in step (1040). Moreover, a timer is configured in step (1050) to compare the time of supplying electric power to resistance to preheat motor with a predetermined time. Also, when the time passes a predetermined time after beginning to supply to the resistance then, the electric power supply is stopped and motor rotation is started at step (1060).

Further, when the antenna is left unturned in cold conditions for a long time, the motor torque at a starting time may increase due to the influence of grease hardening and the like, and a high motor drive current is needed to flow. Therefore, it is necessary to heat the vicinity of the motor by passing a current through a resistance that functions as a regenerative brake under strong winds. Moreover, when the antenna is already rotated, a large torque is not required, thus it is not necessary to heat the vicinity of the motor.

Table 2 illustrates the average and maximum value of motor drive current when pre-heat is off as well as when pre-heat is on. Also, the difference between maximum motor drive current for pre-heat off and pre-heat on is illustrated. Similarly, the difference between average motor drive current for pre-heat off and pre-heat on is also illustrated in table 2.

**Table 2: Average and maximum value of motor drive current when pre-heat is off/on.**

| | | pre-heat off | pre-heat on | Difference |
|---|---|---|---|---|
| Motor Drive Current | Max. | 6.84A | 4.88A | 1.96A |
| | Ave. | 5.56A | 3.88A | 0.68A |

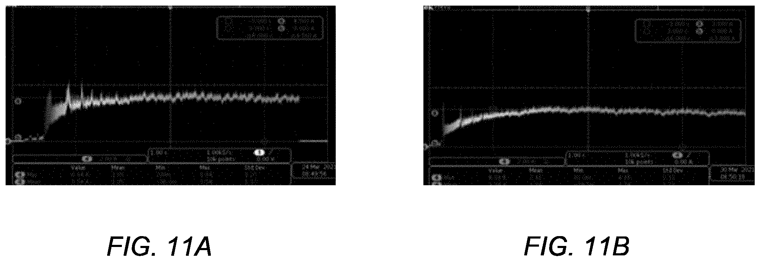

FIG.11 (A) and 11 (B) show a comparison of actual motor drive current waveforms when the motor is preheated and when the motor is not preheated under a cold temperature of -40 °C. In this embodiment, the motor voltage is driven at 48 V. The power is reduced by a maximum of 94 W/31.7 W on average compared with the case without preheating.

The use of the present invention is not limited to marine radar apparatuses. It is also applicable to radar antenna apparatus installed on other moving bodies such as airplanes. The present invention is applicable and can be used not only for semiconductor-type radar apparatus but also for magnetron-type radar apparatus. With the magnetron-type radar apparatus, an electric power source is provided for heating the magnetron. But, this electric power source is provided separately and independently of the electric power source for the signal transmission and the motor drive. Thus, the same control method can be used for the magnetron-type. It is to be noted that, in general, the control is conducted after a preheating of the magnetron is completed.

It is understood that the preceding description is given merely by way of illustration and not in limitation of the invention and that various modifications may be made thereto without departing from the spirit of the invention as claimed.

In understanding the scope of the present invention, the term "comprising" and its derivatives, as used herein, are intended to be open-ended terms that specify the presence of the stated features, elements, components, groups, integers, and/or steps, but do not exclude the presence of other unstated features, elements, components, groups, integers and/or steps. The foregoing also applies to words having similar meanings such as the terms, "having" and "including" their derivatives. Also, the terms "section, "part," "portion," "member" or "element" when used in the singular can have the dual meaning of a single part or a plurality of parts.

## Claims

1. An anti-freezing radar apparatus, comprising:
an antenna (210) configured to transmit and receive microwaves;
a motor (220) configured to rotate the antenna (210);
a power supplier (420) configured to supply power to the motor (220);
a resistance (240), electrically connectable with the motor (220) wherein the resistance is configured to consume power generated by rotation of the antenna (210) by an external force;
a thermometer (320) configured to measure temperature of or around the radar apparatus; and
a control unit (340), coupled to a motor drive unit (370) and the power supplier (420), configured to allow current to flow from the power supplier (420) to the resistance (240) to heat the motor (220), when the temperature measured by the thermometer (320) is less than or equal to a predetermined temperature.

2. The anti-freezing radar apparatus according to claim 1, wherein:
the control unit (340) includes:
a power switch (520), coupled to the power supplier (420) and the motor (220), configured to:
electrically connect the power supplier (420) and the motor (220), and
disconnect the power supplier (420) and the motor (220), when the antenna (210) is rotated by the external force.

3. The anti-freezing radar apparatus according to claims 1 or 2, wherein the control unit further comprising:
a brake switch (510), coupled to the power switch (520) and the resistance (240), configured to electrically connect the power supplier (420) and the motor (220) to create a closed circuit of the motor (220) and resistance (240), when the antenna (210) is rotated by the external force; and
electrically connect the power switch (520) and the resistance (240) to pass the current through the resistance (240), when the temperature is less than or equal to the predetermined temperature.

4. The anti-freezing radar apparatus according to any of the claims 1 to 3, wherein the brake switch disconnects the power supplier (420) and the resistance (240), when the power switch (520) electrically connects the power supplier (420) and the motor (220).

5. The anti-freezing radar apparatus according to any of the claims 1 to 4, further comprising:
a timing unit (1050) configured to measure a time duration for which the power supplier (420) supplies electric power to the resistance (240),
wherein; the power supply (420) disconnects from the resistance (240) and connects to the motor drive unit (370), when the time reaches the predetermined limit (1060).

6. The anti-freezing radar apparatus according to any of the claims 1 to 5, further comprising; an electric power meter (230), connectable to the motor (220), wherein the electric power meter (230) detects an electric power and outputs a power detected signal to the control unit (340).

7. The anti-freezing radar apparatus according to any of the claims 1 to 3, wherein the antenna is rotated 360 degrees and rotation is 1 to 3 seconds per revolution.

8. The anti-freezing radar apparatus according to any of the claims 1 to 3, wherein:
the external force is either wind or strong winds.

9. The anti-freezing radar apparatus according to any of the claims 1 to 8, wherein: the anti-freezing radar apparatus alleviates hardening of grease at a low temperature or reduces the rotation torque of the motor or prevents freezing of the rotating part of the antenna.

10. A method of controlling an anti-freezing radar apparatus, comprising:
supplying an electric power to a motor (220) by a power supplier (420);
rotating an antenna (210) by the motor (220);
generating a power by rotation of the antenna (210) by an external force;
consuming the power by a resistance (240);
measuring temperature of or around the radar apparatus by a thermometer (320);
controlling a flow of current from the power supplier (420) to the resistance (240) by a control unit (340) to heat the motor (220), when the temperature measured by the thermometer (320) is less than or equal to a predetermined temperature;
wherein, the resistance (240) is connected with the motor (220), and the antenna (210) is rotated either by an external force or by the motor (220).

11. The method for controlling the anti-freezing radar apparatus according to claim 10, the method comprising:
arranging a power switch (520) between the power supplier (420) and the motor (220), configured to connect the power supplier (420) and the motor (220), and
disconnect the power supplier (420) and the motor (220), when the antenna (210) is rotated by the external force.

12. The method for controlling the anti-freezing radar apparatus according to any of the claims 10 or 11, further comprising:
arranging a brake switch (510) between the power switch (520) and the resistance (240), configured to connect the power supplier (420) and the motor (220) to form a closed circuit of the motor (220) and resistance (240), when the antenna (210) is rotated by the external force,
connect the power switch (520) and the resistance (240) to pass the current through the resistance (240), when the temperature is less than or equal to the predetermined temperature, and
disconnect the power supplier (420) and the resistance (240), when the power switch (520) electrically connects the power supplier (420) and the motor (220).

13. The method for controlling the anti-freezing radar apparatus according to any of the claims 10 to 12, further comprising:
configuring a timer (1050) for measuring a time duration for which the power supplier (420) supplies electric power to the resistance (240),
wherein; the power supply (420) disconnects from the resistance (240) and connects to the motor drive unit (370), when the time reaches the predetermined limit (1060).

14. The method for controlling the anti-freezing radar apparatus according to any of the claims 10 to 13, further comprising:
detecting an electric power by an electric power meter (230) and outputting a power detected signal to the control unit (340) wherein, the electric power meter (230) is connectable to the motor (220).

15. The method of controlling an anti-freezing radar apparatus according to the claim 10, wherein: the external force is either wind or strong winds.

## Patentansprüche

1. Frostschutzradarvorrichtung, aufweisend:
eine Antenne (210), die konfiguriert ist, um Mikrowellen zu senden und zu empfangen;
einen Motor (220), der konfiguriert ist, um die Antenne (210) zu drehen;
eine Stromversorgung (420), die konfiguriert ist, um den Motor (220) mit Strom zu versorgen;
einen Widerstand (240), der elektrisch mit dem Motor (220) verbindbar ist, wobei der Widerstand konfiguriert ist, um Strom zu verbrauchen, der durch Drehung der Antenne (210) durch eine externe Kraft erzeugt wird;
ein Thermometer (320), das konfiguriert ist, um die Temperatur der oder um die Radarvorrichtung herum zu messen; und
eine Steuereinheit (340), die mit einer Motorantriebseinheit (370) und der Stromversorgung (420) gekoppelt ist, die konfiguriert ist, um zu ermöglichen, dass Strom von der Stromversorgung (420) zu dem Widerstand (240) fließt, um den Motor (220) zu erwärmen, wenn die von dem Thermometer (320) gemessene Temperatur kleiner oder gleich einer vorbestimmten Temperatur ist.

2. Frostschutzradarvorrichtung nach Anspruch 1, wobei:
die Steuereinheit (340) Folgendes beinhaltet:
einen Leistungsschalter (520), der mit der Stromversorgung (420) und dem Motor (220) gekoppelt ist, der konfiguriert ist, um:
die Stromversorgung (420) und den Motor (220) elektrisch zu verbinden, und
die Stromversorgung (420) und den Motor (220) zu trennen, wenn die Antenne (210) durch die externe Kraft gedreht wird.

3. Frostschutzradarvorrichtung nach Anspruch 1 oder 2, wobei die Steuereinheit ferner Folgendes aufweist:
einen Bremsschalter (510), der mit dem Leistungsschalter (520) und dem Widerstand (240) gekoppelt ist, der konfiguriert ist, um die Stromversorgung (420) und den Motor (220) elektrisch zu verbinden, um einen geschlossenen Stromkreis des Motors (220) und des Widerstands (240) zu erzeugen, wenn die Antenne (210) durch die externe Kraft gedreht wird; und
den Leistungsschalter (520) und den Widerstand (240) elektrisch zu verbinden, um den Strom durch den Widerstand (240) zu leiten, wenn die Temperatur kleiner oder gleich der vorbestimmten Temperatur ist.

4. Frostschutzradarvorrichtung nach einem der Ansprüche 1 bis 3, wobei der Bremsschalter die Stromversorgung (420) und den Widerstand (240) trennt, wenn der Leistungsschalter (520) die Stromversorgung (420) und den Motor (220) elektrisch verbindet.

5. Frostschutzradarvorrichtung nach einem der Ansprüche 1 bis 4, ferner aufweisend:
eine Zeitmesseinheit (1050), die konfiguriert ist, um eine Zeitdauer zu messen, für die die Stromversorgung (420) den Widerstand (240) mit elektrischem Strom versorgt,
wobei sich die Stromversorgung (420) von dem Widerstand (240) trennt und mit der Motorantriebseinheit (370) verbindet, wenn die Zeit die vorbestimmte Grenze (1060) erreicht.

6. Frostschutzradarvorrichtung nach einem der Ansprüche 1 bis 5, ferner aufweisend:
einen elektrischen Leistungsmesser (230), der mit dem Motor (220) verbindbar ist, wobei der elektrische Leistungsmesser (230) eine elektrische Leistung erfasst und ein erfasstes Leistungssignal an die Steuereinheit (340) ausgibt.

7. Frostschutzradarvorrichtung nach einem der Ansprüche 1 bis 3, wobei die Antenne um 360 Grad gedreht wird und die Drehung 1 bis 3 Sekunden pro Umdrehung beträgt.

8. Frostschutzradarvorrichtung nach einem der Ansprüche 1 bis 3, wobei:
die externe Kraft entweder Wind oder starker Wind ist.

9. Frostschutzradarvorrichtung nach einem der Ansprüche 1 bis 8, wobei: die Frostschutzradarvorrichtung das Härten von Fett bei einer niedrigen Temperatur mindert oder das Drehmoment des Motors reduziert oder das Einfrieren des sich drehenden Teils der Antenne verhindert.

10. Verfahren zum Steuern einer Frostschutzradarvorrichtung, aufweisend:
Versorgen eines Motors (220) mit elektrischem Strom durch eine Stromversorgung (420);
Drehen einer Antenne (210) durch den Motor (220);
Erzeugen eines Stroms durch Drehung der Antenne (210) durch eine externe Kraft;
Verbrauchen des Stroms durch einen Widerstand (240);
Messen der Temperatur der oder um die Radarvorrichtung herum durch ein Thermometer (320);
Steuern eines Stromflusses von der Stromversorgung (420) zu dem Widerstand (240) durch eine Steuereinheit (340), um den Motor (220) zu erwärmen, wenn die von dem Thermometer (320) gemessene Temperatur kleiner oder gleich einer vorbestimmten Temperatur ist;
wobei der Widerstand (240) mit dem Motor (220) verbunden ist und die Antenne (210) entweder durch eine externe Kraft oder durch den Motor (220) gedreht wird.

11. Verfahren zum Steuern der Frostschutzradarvorrichtung nach Anspruch 10, wobei das Verfahren Folgendes aufweist:
Anordnen eines Leistungsschalters (520) zwischen der Stromversorgung (420) und dem Motor (220), der konfiguriert ist, um die Stromversorgung (420) und den Motor (220) zu verbinden, und
Trennen der Stromversorgung (420) und des Motors (220), wenn die Antenne (210) durch die externe Kraft gedreht wird.

12. Verfahren zum Steuern der Frostschutzradarvorrichtung nach einem der Ansprüche 10 oder 11, ferner aufweisend:
Anordnen eines Bremsschalters (510) zwischen dem Leistungsschalter (520) und dem Widerstand (240), der konfiguriert ist, um die Stromversorgung (420) und den Motor (220) zu verbinden, um einen geschlossenen Stromkreis des Motors (220) und des Widerstands (240) zu bilden, wenn die Antenne (210) durch die externe Kraft gedreht wird,
Verbinden des Leistungsschalters (520) und des Widerstands (240), um den Strom durch den Widerstand (240) zu leiten, wenn die Temperatur kleiner oder gleich der vorbestimmten Temperatur ist, und
Trennen der Stromversorgung (420) und des Widerstands (240), wenn der Leistungsschalter (520) die Stromversorgung (420) und den Motor (220) elektrisch verbindet.

13. Verfahren zum Steuern der Frostschutzradarvorrichtung nach einem der Ansprüche 10 bis 12, ferner aufweisend:
Konfigurieren eines Zeitmessers (1050) zum Messen einer Zeitdauer, für die die Stromversorgung (420) den Widerstand (240) mit elektrischem Strom versorgt,
wobei sich die Stromversorgung (420) von dem Widerstand (240) trennt und mit der Motorantriebseinheit (370) verbindet, wenn die Zeit die vorbestimmte Grenze (1060) erreicht.

14. Verfahren zum Steuern der Frostschutzradarvorrichtung nach einem der Ansprüche 10 bis 13, ferner aufweisend:
Erfassen einer elektrischen Leistung durch einen elektrischen Leistungsmesser (230) und Ausgeben eines erfassten Leistungssignals an die Steuereinheit (340), wobei der elektrische Leistungsmesser (230) mit dem Motor (220) verbindbar ist.

15. Verfahren zum Steuern einer Frostschutzradarvorrichtung nach Anspruch 10, wobei: die externe Kraft entweder Wind oder starker Wind ist.

## Revendications

1. Appareil radar antigel, comprenant :
une antenne (210) configurée pour émettre et recevoir des micro-ondes ;
un moteur (220) configuré pour faire tourner l'antenne (210) ;
un fournisseur d'énergie (420) configuré pour fournir de l'énergie au moteur (220) ;
une résistance (240), pouvant être connectée électriquement au moteur (220) dans lequel la résistance est configurée pour consommer de l'énergie générée par la rotation de l'antenne (210) par une force externe ;
un thermomètre (320) configuré pour mesurer la température de l'appareil radar ou autour de celui-ci ; et
une unité de commande (340), couplée à une unité d'entraînement de moteur (370) et au fournisseur d'énergie (420), configurée pour permettre au courant de circuler du fournisseur d'énergie (420) à la résistance (240) pour chauffer le moteur (220), lorsque la température mesurée par le thermomètre (320) est inférieure ou égale à une température prédéterminée.

2. Appareil radar antigel selon la revendication 1, dans lequel :
l'unité de commande (340) comporte :
un commutateur d'alimentation (520), couplé au fournisseur d'énergie (420) et au moteur (220), configuré pour :
connecter électriquement le fournisseur d'énergie (420) et le moteur (220), et
déconnecter le fournisseur d'énergie (420) et le moteur (220), lorsque l'antenne (210) est tournée par la force externe.

3. Appareil radar antigel selon les revendications 1 ou 2, dans lequel l'unité de commande comprend en outre :
un commutateur de frein (510), couplé au commutateur d'alimentation (520) et à la résistance (240), configuré pour connecter électriquement le fournisseur d'énergie (420) et le moteur (220) pour créer un circuit fermé du moteur (220) et de la résistance (240), lorsque l'antenne (210) est tournée par la force externe ; et
connecter électriquement le commutateur d'alimentation (520) et la résistance (240) pour faire passer le courant à travers la résistance (240), lorsque la température est inférieure ou égale à la température prédéterminée.

4. Appareil radar antigel selon l'une des revendications 1 à 3, dans lequel le commutateur de frein déconnecte le fournisseur d'énergie (420) et la résistance (240), lorsque le commutateur d'alimentation (520) connecte électriquement le fournisseur d'énergie (420) et le moteur (220).

5. Appareil radar antigel selon l'une des revendications 1 à 4, comprenant en outre :
une unité de temporisation (1050) configurée pour mesurer une durée pendant laquelle le fournisseur d'énergie (420) fournit de l'énergie électrique à la résistance (240),
dans lequel ; le fournisseur d'énergie (420) se déconnecte de la résistance (240) et se connecte à l'unité d'entraînement de moteur (370), lorsque le temps atteint la limite prédéterminée (1060).

6. Appareil radar antigel selon l'une des revendications 1 à 5, comprenant en outre :
un compteur électrique (230), pouvant être connecté au moteur (220), dans lequel le compteur électrique (230) détecte une énergie électrique et émet un signal de détection d'énergie vers l'unité de commande (340).

7. Appareil radar antigel selon l'une des revendications 1 à 3, dans lequel l'antenne est tournée de 360 degrés et la rotation est de 1 à 3 secondes par tour.

8. Appareil radar antigel selon l'une des revendications 1 à 3, dans lequel :
la force externe est soit le vent, soit des vents forts.

9. Appareil radar antigel selon l'une des revendications 1 à 8, dans lequel : l'appareil radar antigel atténue le durcissement de graisse à basse température ou réduit le couple de rotation du moteur ou empêche le gel de la partie rotative de l'antenne.

10. Procédé de commande d'un appareil radar antigel, comprenant :
fournir une énergie électrique à un moteur (220) par un fournisseur d'énergie (420) ;
faire tourner une antenne (210) par le moteur (220) ;
générer une énergie par rotation de l'antenne (210) par une force externe ;
faire consommer de l'énergie par une résistance (240) ;
mesurer la température de l'appareil radar ou autour de celui-ci par un thermomètre (320) ;
commander un flux de courant depuis le fournisseur d'énergie (420) vers la résistance (240) par une unité de commande (340) pour chauffer le moteur (220), lorsque la température mesurée par le thermomètre (320) est inférieure ou égale à une température prédéterminée ;
dans lequel la résistance (240) est connectée au moteur (220), et l'antenne (210) est tournée soit par une force externe soit par le moteur (220).

11. Procédé pour commander l'appareil radar antigel selon la revendication 10, le procédé comprenant :
agencer un commutateur d'alimentation (520) entre le fournisseur d'énergie (420) et le moteur (220), configuré pour connecter le fournisseur d'énergie (420) et le moteur (220), et
déconnecter le fournisseur d'énergie (420) et le moteur (220), lorsque l'antenne (210) est tournée par la force externe.

12. Procédé pour commander l'appareil radar antigel selon l'une des revendications 10 ou 11, comprenant en outre :
agencer un commutateur de frein (510) entre le commutateur d'alimentation (520) et la résistance (240), configuré pour connecter le fournisseur d'énergie (420) et le moteur (220) pour former un circuit fermé du moteur (220) et de la résistance (240), lorsque l'antenne (210) est tournée par la force externe,
connecter le commutateur d'alimentation (520) et la résistance (240) pour faire passer le courant à travers la résistance (240), lorsque la température est inférieure ou égale à la température prédéterminée, et
déconnecter le fournisseur d'énergie (420) et la résistance (240), lorsque le commutateur d'alimentation (520) connecte électriquement le fournisseur d'énergie (420) et le moteur (220).

13. Procédé pour commander l'appareil radar antigel selon l'une des revendications 10 à 12, comprenant en outre :
configurer un temporisateur (1050) pour mesurer une durée pendant laquelle le fournisseur d'énergie (420) fournit de l'énergie électrique à la résistance (240),
dans lequel ; le fournisseur d'énergie (420) se déconnecte de la résistance (240) et se connecte à l'unité d'entraînement de moteur (370), lorsque le temps atteint la limite prédéterminée (1060).

14. Procédé pour commander l'appareil radar antigel selon l'une des revendications 10 à 13, comprenant en outre :
détecter une énergie électrique par un compteur électrique (230) et émettre un signal de détection d'énergie vers l'unité de commande (340), dans lequel le compteur électrique (230) peut être connecté au moteur (220).

15. Procédé de commande d'un appareil radar antigel selon la revendication 10, dans lequel : la force externe est soit le vent, soit des vents forts.
